# EUROPÄISCHE PATENTSCHRIFT

(11) **EP 1 925 485 B1**
(45) Veröffentlichungstag und Bekanntmachung des Hinweises auf die Patenterteilung: **20.10.2010**
(21) Anmeldenummer: 07021961.3
(22) Anmeldetag: 13.11.2007
(51) Int. Cl.: B60J 7/20

(54) **Cabriolet**
Convertible
Cabriolet

(30) Priorität: 23.11.2006 DE 102006055191
(43) Veröffentlichungstag der Anmeldung: 28.05.2008
(73) Patentinhaber: Dr. Ing. h.c. F. Porsche AG, 70435 Stuttgart (DE)
(72) Erfinder: Armbruster, Reiner, 75417 Muehlacker (DE); Knirsch, Joachim, 73460 Hüttlingen (DE)

(56) Entgegenhaltungen:
- DE-A- 2 622 343
- DE-A1- 4 106 732
- DE-A1- 10 252 987
- DE-A1- 10 311 142
- DE-A1- 19 813 347
- DE-A1-102004 010 628

## Beschreibung

Die vorliegende Erfindung betrifft ein Cabriolet mit den Merkmalen des Oberbegriffs des Anspruchs 1.

Aus der DE 10 2004 010 628 A1 ist ein Cabriolet mit einem im hinteren Fahrzeugbereich ablegbaren Dach bekannt, das in vollständig geöffneter Stellung unterhalb eines geschlossenen Verdeckkastendeckels gehalten und mit dessen Hilfe in seiner Lage fixierbar ist, wobei hierfür dem Verdeckkastendeckel zumindest ein Niederhalter zugeordnet ist. Der Niederhalter weist bei geschlossenem Verdeckkastendeckel eine abwärtsweisende und in der Länge veränderbare Erstreckungskomponente auf.
Hierdurch sollen insbesondere Toleranzen aus der Rohbaufertigung ausgeglichen werden können.

Aus der DE 198 13 347 C2, die dem Oberbegriff des Anspruchs 1 entspricht ist ein schwingungsdämpfender Niederhalter mit hoher Verschleißfestigkeit und geringem Oberflächenabrieb bekannt, welcher ein Formteil mit einem elastomeren Kunststoff, thermoplastischen Kunststoff, Naturkautschuk und/oder Mischungen derselben ist.

Weitere Cabriolets bzw. Verdecke für Cabriolets sind beispielsweise aus DE 41 06 732 A1 und aus der DE 39 15 867 C1 bekannt.

Bei herkömmlichen Verdecken ist es üblicherweise bekannt, diese in geöffnetem Zustand in einem Verdeckkasten durch einen Verdeckkastendeckel mit entsprechenden Niederhaltern niederzuhalten. Aufgrund von Relativbewegungen zwischen dem Niederhalter und dem abgelegten Verdeck beim Fahrbetrieb des Cabriolets, kann es insbesondere an den Berührungspunkten zwischen dem Niederhalter und einem Verdeckbezug des Verdecks zu einem Aufscheuern des Verdeckbezugs und damit zu einer Beeinträchtigung der Lebensdauer des Verdecks kommen.

Die vorliegende Erfindung beschäftigt sich mit dem Problem, für ein Verdeck der gattungsgemäßen Art eine verbesserte oder zumindest eine andere Ausführungsform anzugeben, die sich insbesondere durch eine erhöhte Lebensdauer auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, die Reibung zwischen einem Verdeckbezug des abgelegten Verdecks und zumindest einem diesem zugewandten Niederhalter, welcher das Verdeck in seiner Ablagestellung niederhält, zu reduzieren. Dies wird erfindungsgemäß dadurch erreicht, dass der zumindest eine Niederhalter eine dem Verdeckbezug zugewandte, reibungsreduzierende Beschichtung aufweist. Eine derartige Beschichtung reduziert den Reibungswiderstand zwischen dem Niederhalter und dem Verdeck bzw. dem Verdeckbezug und reduziert dadurch eine mechanische Belastung für das Verdeck, wodurch sich dessen Lebensdauer erhöht. Zudem zeichnen sich deutlich weniger schnell, wenn überhaupt, Abbrieberscheinungen auf einem Verdeckbezug des Verdecks ab, wodurch dieser über lange Zeit einen optisch einwandfreien Zustand behält.

Erfindungsgemäß ist die Beschichtung aus Polytetrafluorethylen oder aus einem thermoplastischen Polyurethan (TPU) ausgebildet. Polytetrafluorethylen ist ein vollfluoriertes Polymer und wird umgangssprachlich oft mit dem Handelsnamen Teflon^{®} bezeichnet. Polytetrafluorethylen hat einen sehr geringeren Reibungskoeffizienten und weist darüber hinaus die vorteilhafte Eigenschaft auf, dass die Haftreibung genauso groß ist wie die Gleitreibung, so dass ein Übergang vom Stillstand zur Bewegung ruckfrei stattfinden kann. Aus diesen Gründen ist dieser Kunststoff besonders geeignet, die dem Verdeck zugewandte Beschichtung des Niederhalter zu bilden.

Erfindungsgemäß ist die Beschichtung als Folie ausgebildet. Eine derartige, insbesondere selbstklebende, Folie, erleichtert das Anbringen der Beschichtung auf dem Niederhalter. Denkbar sind auch Varianten, bei welchen die Beschichtung als Folie mit einem durch Hitze aktivierbaren Kleber ausgebildet ist, so dass diese beispielsweise auf den Niederhalter aufgebügelt werden kann.
Ebenfalls vorstellbar ist ein Einlegen der Folie in eine Form zum Herstellen des Niederhalters. Der Niederhalter wird daraufhin in einem Schäumprozess hergestellt.

Erfindungsgemäß ist am Verdeckkastendeckel eine reibungsreduzierende Beschichtung angeordnet, die den Niederhalter zumindest teilweise umgibt. Beim im Verdeckkasten abgelegten Verdeck kommt es aufgrund der Faltenbildung oftmals neben einem Kontakt zwischen dem Verdeckbezug und dem Niederhalter auch zu einem direkten Kontakt zwischen dem Verdeckbezug und dem Verdeckkastendeckel, so dass insbesondere an solchen Berührungspunkten ebenfalls eine reibungsreduzierende Beschichtung angeordnet werden sollte. Ist in diesen zusätzlichen Kontaktbereichen eine derartige reibungsreduzierende Beschichtung vorhanden, so wird die mechanische Belastung des Verdeckbezugs durch Reibung reduziert, wodurch die Lebensdauer des Verdecks erhöht werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Ansicht auf einen Verdeckkastendeckel mit einem erfindungsgemäßen Niederhalter,
- Fig. 2: einen erfindungsgemäßen Niederhalter mit einer diesen zumindest teilweise umgebenden Beschichtung,
- Fig. 3: eine Schnittdarstellung entlang der Schnittebene lll-lll,
- Fig. 4: einen als Leiste ausgebildeten Niederhalter.

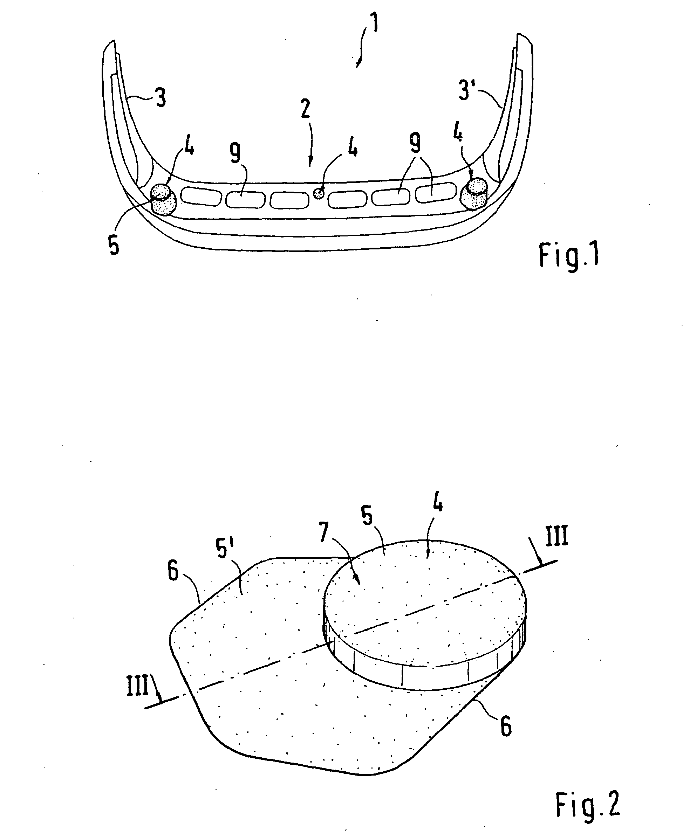

Entsprechend Fig. 1 weist ein Verdeckkastendeckel 1 einen Mittelabschnitt 2 sowie zwei sich jeweils längsendseitig daran anschließende Seitenabschnitte 3, 3' auf. Der Verdeckkastendeckel 1 ist dabei üblicherweise oberhalb eines nicht gezeigten Verdeckkastens angeordnet und verschließt den Verdeckkasten in der Art eines steifen Persennings, sofern ein zu öffnendes Verdeck in seiner Ablagestellung im Verdeckkasten verstaut angeordnet ist. Ein derartiger Verdeckkastendeckel 1 ist somit üblicherweise bei einem Cabriolet eingesetzt. Der Verdeckkasten nimmt bei vollständig geöffnetem Verdeck letzteres in sich auf, wobei das abgelegte Verdeck mit Hilfe des Verdeckkastendeckels 1 niedergehalten und in dieser niedergehaltenen Lage fixiert wird. Zum Niederhalten des Verdecks in seiner Ablagestellung ist am Verdeckkastendeckel 1 zumindest ein auf das Verdeck auflegbarer Niederhalter 4 angeordnet. Ein derartiger Niederhalter 4 ist beispielsweise aus einem schwingungsdämpfenden Kunststoff, insbesondere aus einem Schaumstoff, ausgebildet, so dass sich keine Schwingungen vom Verdeckkastendeckel 1 auf das Verdeck bzw. den Verdeckbezug übertragen.

Da sich der Verdeckkastendeckel 1 über den zumindest einen Niederhalter 4 bei geöffnetem Verdeck auf dem Verdeckbezug des Verdecks abstützt, treten insbesondere in der Kontaktzone zwischen dem Niederhalter 4 und dem Verdeckbezug mechanische Belastungen auf, welche im ungünstigen Fall zu einer Beeinträchtigung der Lebenserwartung und/oder zu optisch sichtbaren Beschädigungen am Verdeckbezug führen können.

Um diese mechanischen Belastungen, welche insbesondere beim Fahren auftreten, reduzieren zu können, weist der zumindest eine Niederhalter 4 eine dem Verdeck zugewandte, reibungsreduzierende Beschichtung 5 auf. Eine derartige Beschichtung 5 kann beispielsweise aus Polytetrafluorethylen (Teflon^{®}) oder aus einem thermoplastischen Polyurethan (TPU) ausgebildet sein. Eine Polytetrafluorethylen wird üblicherweise auch als Antihaftbeschichtung bezeichnet und zeichnet sich durch extrem geringere Reibungsbeiwerte aus. Zudem ist ein Haftreibungskoeffizient bei einem derartigen Material gleich groß wie ein Gleitreibungskoeffizient, was sich besonders positiv auf die zwischen Verdeck und Verdeckkastendeckel 1 auftretende Belastungen auswirkt.

Um die Beschichtung 5 möglichst einfach auf dem zumindest einen Niederhalter 4 aufbringen zu können, ist diese als Folie, insbesondere als selbstklebende Folie ausgebildet wobei auch denkbar ist, dass die Beschichtung 5 eine durch Wärme aktivierbare Klebeschicht aufweist, so dass die Beschichtung 5 beispielsweise auf den Niederhalter 4 aufgebügelt werden kann. Eine Verbindung zwischen der Beschichtung 5 und dem Niederhalter 4 kann auch während eines Schäumprozesses des Niederhalters 4 erfolgen.

Da der Verdeckbezug des Verdecks 1 in geöffnetem Zustand Falten wirft, ist es durchaus denkbar, dass ein Kontakt zwischen dem Verdeckkastendeckel 1 und dem Verdeckbezug nicht nur im Bereich des zumindest einen Niederhalters 4 besteht, sondern beispielsweise auch in benachbarten Bereichen, weshalb werden kontaktgefährdete Bereiche zusätzlich mit einer reibungsreduzierenden Beschichtung 5' zu versehen.

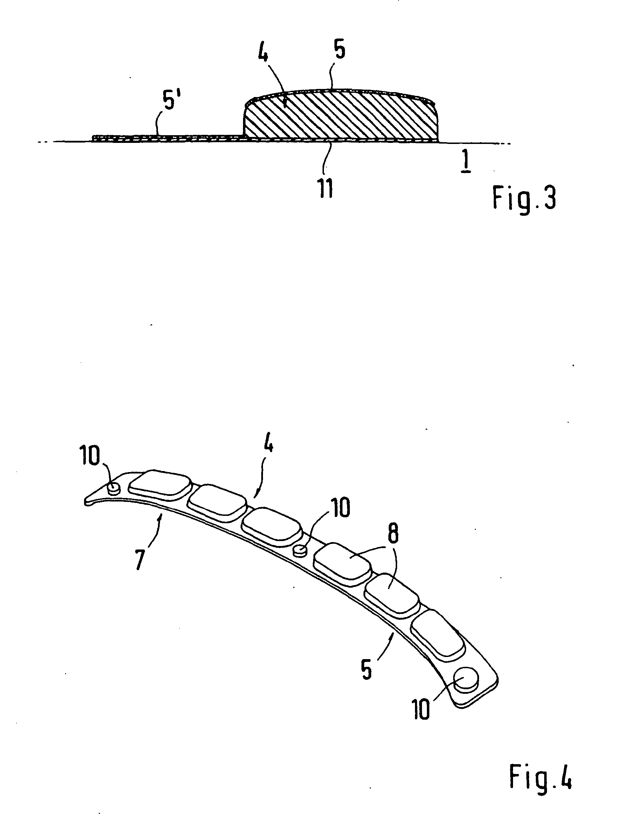

In Fig. 2 ist hierbei ein Niederhalter 4 gezeigt, der zumindest teilweise von einer derartigen reibungsreduzierenden Beschichtung 5' umgeben ist. Denkbar ist hierbei, dass die, den Niederhalter 4 zumindest teilweise umgebende Beschichtung 5' auf einer sich zwischen dem Niederhalter 4 und dem Verdeckkastendeckel 1 erstreckenden Trägerschicht 11 festgelegt ist, wodurch der Niederhalter 4 über die Trägerschicht 11 am Verdeckkastendeckel 1 befestigt ist (vgl. auch Fig. 3). Dabei kann zur einfachen Befestigung auch die Trägerschicht 11 als, insbesondere selbstklebende, Folie ausgebildet sein, wobei auch für die Beschichtung 5' der Funktionsflächen vorzugsweise Polytetrafluorethylen oder thermoplastisches Polyurethan (TPU) als Material verwendet wird.

Eine weitere Vereinfachung der Fertigung bzw. des Anbringens des erfindungsgemäßen Niederhalters 4 am Verdeckkastendeckel 1 wird beispielsweise dadurch gegeben, dass die den Niederhalter 4 tragende Trägerschicht 11 bzw. Beschichtung 5' und der Niederhalter 4 selbst eine vorfertigbare Baugruppe bilden, welche lediglich bei der Endmontage mit dem Verdeckkastendeckel 1 verbunden werden müssen. Hierbei kann auch die Beschichtung 5' wie vorher erwähnt, als selbstklebende Folie ausgebildet sein, so dass diese zusammen mit dem Niederhalter 4 einfach auf den Verdeckkastendeckel 1 aufgeklebt werden kann. Dabei können insbesondere Kanten 6 der, den Niederhalter 4 umgebenden Beschichtung 5' so geschnitten sein, dass diese mit entsprechenden Kanten am Verdeckkastendeckel 1 fluchten und dadurch einen genaue und einfache Positionierung der aus dem Niederhalter 4 und der Beschichtung 5' gebildeten Baugruppe am Verdeckkastendeckel 1 ermöglicht.

In Fig. 3 ist ein Schnitt durch einen erfindungsgemäßen Niederhalter 4 gezeigt, wobei sich die, den Niederhalter 4 zumindest teilweise umgebende Trägerschicht 11 auch unterhalb des Niederhalters 4 erstreckt. Der Niederhalter 4 gemäß der Fig. 3 weist dabei ein leicht konvex ausgerundetes, freies Ende auf, welches ebenfalls mit der reibungsreduzierenden Beschichtung 5 beschichtet ist und über diese Beschichtung 5 mit einem nicht gezeigten Verdeckbezug in Berührung kommt.

Um über lange Sicht gesehen Abdrücke des Niederhalters 4 auf dem Verdeckbezug vermeiden zu können, sollte die Flächenpressung einen bestimmten Wert, beispielsweise 10 N/mm², nicht übersteigen. Insofern ist es sinnvoll, eine Abstützfläche 7, über welche sich der Niederhalter 4 am Verdeckbezug abstützt, so groß wie möglich auszubilden.
Eine große Abstützfläche 7 weist dabei ein Niederhalter 4 auf, welcher in der Art einer Leiste, wie in Fig. 4 gezeigt, ausgebildet ist. Der Niederhalter 4 erstreckt sich dabei gemäß der Fig. 4 über zumindest einen Teil der Querabmessung des Verdeckkastendeckels 1, wobei zur Befestigung des als Leiste ausgebildeten Niederhalters 4 zumindest ein, dem Verdeckkastendeckel 1 zugewandtes Positionierelement 8 ausgebildet ist, welches mit einer am Verdeckkastendeckel 1 angeordneten Positionieröffnung 9 (vgl. Fig. 1) zusammenwirkt. Bei der Ausführungsform des Niederhalters 4 gemäß der Fig. 4 sind insgesamt sechs Posierelemente 8 vorgesehen, welche im wesentlichen linienförmig angeordnet sind und welche komplementär zu insgesamt sechs Positionieröffnungen 9 (vgl. Fig. 1) am Verdeckkastendeckel 1 ausgebildet sind. Dabei ist denkbar, dass das zumindest eine Positionierelement 8 als Steckelement ausgebildet ist, welches in eine Verdeckkastendeckel 1 angeordnete Stecköffnung einsteckbar ist. Dabei greift das zumindest eine Positionierelement 8 vorzugsweise formschlüssig in die zugehörige Positionieröffnung 9 am Verdeckkastendeckel 1 ein.

Bei einer vorteilhaften Weiterbildung ist auch denkbar, dass das Positionierelement 8 als Rastelement ausgebildet ist und beim Einstecken in die Positionieröffnung 9 mit einem Rand derselben verrastet. Die Positionierelemente 8 bewirken dabei zusammen mit den verdeckkastendeckelseitigen Positionieröffnungen 9 ein einfaches und gleichzeitig exaktes Anbringen des Niederhalters 4 am Verdeckkastendeckel 1, da durch das Einstecken der Positionierelemente 8 in die Positionieröffnungen 9 der Niederhalter 4 bereits exakt am Verdeckkastendeckel 1 ausgerichtet ist. Ist das wenigstens eine Positionierelement 8 zudem als Rastelement ausgebildet, so kann der Niederhalter 4 lediglich über diese Rastverbindung zuverlässig und fest mit dem Verdeckkastendeckel 1 verbunden werden.

Insbesondere bei einer Ausbildung des wenigstens einen Positionierelements 8 als Steckelement kann eine feste Verbindung zwischen dem Niederhalter 4 und dem Verdeckkastendeckel 1 durch eine zumindest punktuelle Verklebung erreicht werden, wobei diese punktuelle Verklebung gemäß Fig. 4 vorzugsweise an mehreren Klebepunkten 10 erfolgt. Eine derartige Verklebung ist aber auch bei Positionierelementen 8 vorstellbar, welche als Rastelement ausgebildet sind, so dass die Verklebung in diesem Fall den zuverlässigen Verbund zwischen Niederhalter 4 und Verdeckkastendeckel 1 zusätzlich zur Verrastung gewährleistet.

## Patentansprüche

1. Cabriolet mit einem im hinteren Bereich des Cabriolets ablegbaren Verdeck,
- das in vollständig geöffneter Stellung in einem Verdeckkasten aufgenommen ist, der durch einen Verdeckkastendeckel (1) zumindest teilweise verschließbar ist,
- wobei das abgelegte Verdeck mit Hilfe des Verdeckkastendeckels (1) niedergehalten und in dieser niedergehaltenen Lage fixiert ist,
- wobei dem Verdeckkastendeckel (1) hierfür zumindest ein auf das Verdeck auflegbarer Niederhalter (4) zugeordnet ist, der eine dem Verdeck zugewandte reibungsreduzierende Beschichtung (5) aufweist,
**dadurch gekennzeichnet, dass** die Beschichtung (5) durch eine am Niederhalter (4) befestigte Folie aus Polytetrafluorethylen oder aus einem thermoplastischen Polyurethan (TPU) gebildet wird und dass am Verdeckkastendeckel (1) eine reibungsreduzierende Beschichtung (5') angeordnet ist, die den Niederhalter (4) zumindest teilweise umgibt.

2. Cabriolet nach Anspruch 1, **dadurch gekennzeichnet, dass** die Beschichtung (5) als, insbesondere selbstklebende, Folie ausgebildet ist.

3. Cabriolet nach Anspruch 1, **dadurch gekennzeichnet,**
- **dass** sich eine, den Niederhalter (4) zumindest teilweise umgebende Trägerschicht (11) auch zwischen dem Niederhalter (4) und dem Verdeckkastendeckel (1) erstreckt, wodurch der Niederhalter (4) über die Trägerschicht (11) am Verdeckkastendeckel (1) festgelegt ist,
- **dass** die Beschichtung (5') aus Polytetrafluorethylen oder aus einem thermoplastischen Polyurethan (TPU) ausgebildet ist,
- **dass** die Beschichtung (5') und/oder die Trägerschicht (11 als, insbesondere selbstklebende, Folie ausgebildet ist.

4. Cabriolet nach Anspruch 3, **dadurch gekennzeichnet, dass** die den Niederhalter (4) tragende Trägerschicht (11) und der Niederhalter (4) selbst eine vorfertigbare Baugruppe bilden.

5. Cabriolet nach einem der Ansprüche 1 bis 3, **dadurch gekennzeichnet, dass** der Niederhalter (4) als sich über zumindest einen Teil der Querabmessung des Verdeckkastendeckels (1) erstreckende Leiste ausgebildet ist und bei geschlossenem Verdeckkastendeckel (1) flächig auf dem Verdeck aufliegt.

6. Cabriolet nach Anspruch 5, **dadurch gekennzeichnet, dass** an der Leiste zumindest ein, dem Verdeckkastendeckel (1) zugewandtes Positionierelement (8) angeordnet ist, welches mit einer am Verdeckkastendeckel (1) angeordneten Positionieröffnung (9) zusammenwirkt.

7. Cabriolet nach Anspruch 6, **dadurch gekennzeichnet, dass** das Positionierelement (8) als Steck- und/oder Rastelement (8) ausgebildet ist, welches in eine am Verdeckkastendeckel (1) angeordnete Stecköffnung (9) einsteckbar und/oder mit einem am Verdeckkastendeckel (1) angeordneten Gegenrastelement (9) verrastbar ist.

8. Cabriolet nach einem der Ansprüche 5 bis 7, **dadurch gekennzeichnet, dass** der als Leiste ausgebildete Niederhalter (4) mit dem Verdeckkastendeckel (1) zumindest punktuell verklebt ist.

## Claims

1. Convertible with a soft top capable of being deposited in the rear region of the convertible,
- which soft top is received, in the fully open position, in a soft-top box which is at least partially closable by means of a soft-top box lid (1),
- the deposited soft top being held down and fixed in this held-down position with the aid of the soft-top box lid (1),
- the soft-top box lid (1) being assigned for this purpose at least one holding-down device (4) capable of being laid onto the soft top, which holding-down device (4) has a friction-reducing coating (5) which faces the soft top,
**characterized in that**
the coating (5) is formed by a film of polytetrafluoroethylene or of a thermoplastic polyurethane (TPU) which is fixed on the holding-down device (4) and **in that** a friction-reducing coating (5') is arranged on the soft-top box lid (1) and at least partially surrounds the holding-down device (4).

2. Convertible according to Claim 1,
**characterized in that** the coating (5) is formed as an, in particular, self-adhesive film.

3. Convertible according to Claim 1, **characterized**
- **in that** a carrier layer (11) at least partially surrounding the holding-down device (4) also extends between the holding-down device (4) and the soft-top box lid (1), with the result that the holding-down device (4) is secured to the soft-top box lid (1) via the carrier layer (11),
- **in that** the coating (5') is formed from polytetrafluoroethylene or from a thermoplastic polyurethane (TPU), and
- **in that** the coating (5') and/or the carrier layer (11) are/is formed as an, in particular, self-adhesive film.

4. Convertible according to Claim 3, **characterized in that** the carrier layer (11) carrying the holding-down device (4) and the holding-down device (4) itself form a prefabricatable assembly.

5. Convertible according to one of Claims 1 to 3, **characterized in that** the holding-down device (4) is designed as a strip extending over at least a part of the transverse dimension of the soft-top box lid (1), and rests areally on the soft top when the soft-top box lid (1) is closed.

6. Convertible according to Claim 5, **characterized in that** at least one positioning element (8) which faces towards the soft-top box lid (1) is arranged on the strip, which positioning element (8) interacts with a positioning opening (9) arranged on the soft-top box lid (1).

7. Convertible according to Claim 6, **characterized in that** the positioning element (8) is designed as a plug-in and/or latching element (8) which can be plugged into an insertion opening (9) arranged on the soft-top box lid (1) and/or can be latched with a counterpart latching element (9) arranged on the soft-top box lid (1).

8. Convertible according to one of Claims 5 to 7, **characterized in that** the holding-down device (4) which is designed as a strip is adhesively bonded to the soft-top box lid (1) at least in a punctiform manner.

## Revendications

1. Cabriolet avec une capote pouvant être rangée dans la zone arrière du cabriolet ;
ladite capote étant logée dans la position entièrement ouverte dans un caisson de rangement de capote pouvant être fermé au moins en partie par un couvercle de caisson de rangement de capote (1) ;
la capote rangée étant abaissée et fixée dans cette position abaissée à l'aide du couvercle de caisson de rangement de capote (1) ;
au moins un dispositif d'abaissement (4) pouvant être placé sur la capote étant associé au couvercle de caisson de rangement de capote (1) à cette fin , ledit dispositif d'abaissement (4) comportant un revêtement (5) réduisant les frottements orienté vers la capote ; **caractérisé en ce que** le revêtement (5) est formé par un film en polytétrafluoréthylène ou en un polyuréthane thermoplastique (PUT) fixé sur le dispositif d'abaissement (4) et **en ce qu'**un revêtement (5') réduisant les frottements est disposé au niveau du couvercle de caisson de rangement de capote (1), ledit revêtement entourant au moins en partie le dispositif d'abaissement (4).

2. Cabriolet selon la revendication 1, **caractérisé en ce que** le revêtement (5) prend la forme d'un film, notamment autocollant.

3. Cabriolet selon la revendication 1, **caractérisé en ce que :**
une couche de support (11) entourant au moins en partie le dispositif d'abaissement (4) s'étend également entre le dispositif d'abaissement (4) et le couvercle de caisson de rangement de capote (1), faisant que le dispositif d'abaissement (4) est fixé au couvercle de caisson de rangement de capote (1) via la couche de support (11) ;
le revêtement (5') étant réalisé en polytétrafluoréthylène ou en un polyuréthane thermoplastique (PUT) ;
le revêtement (5') et/ou la couche de support (11) prenant la forme d'un film, notamment autocollant.

4. Cabriolet selon la revendication 3, **caractérisé en ce que** la couche de support (11) supportant le dispositif d'abaissement (4) et le dispositif d'abaissement (4) forment eux-mêmes un groupe modulaire préalablement préparé.

5. Cabriolet selon l'une quelconque des revendications 1 à 3, **caractérisé en ce que** le dispositif d'abaissement (4) est réalisé sous forme de baguette s'étendant sur au moins une partie de la dimension transversale du couvercle de caisson de rangement de capote (1) et repose à plat sur la capote lorsque le couvercle de caisson de rangement de capote (1) est fermé.

6. Cabriolet selon la revendication 5, **caractérisé en ce qu'**au moins un élément de positionnement (8) tourné vers le couvercle de caisson de rangement de capote (1) est disposé sur la baguette, lequel élément de positionnement coopère avec une ouverture de positionnement (9) disposée sur le couvercle de caisson de rangement de capote (1).

7. Cabriolet selon la revendication 6, **caractérisé en ce que** l'élément de positionnement (8) est réalisé sous forme d'élément enfichable et/ou encliquetable (8), qui peut être enfiché dans une ouverture d'enfichage (9) disposée sur le couvercle de caisson de rangement de capote (1) et/ou qui peut être encliqueté avec un élément d'encliquetage conjugué (9) disposé sur le couvercle de caisson de rangement de capote (1).

8. Cabriolet selon l'une quelconque des revendications 5 à 7, **caractérisé en ce que** le dispositif d'abaissement (4) réalisé sous forme de baguette est collé au moins ponctuellement au couvercle de caisson de rangement de capote (1).
